# FASCICULE DE BREVET EUROPEEN

(11) **EP 3 286 533 B1**
(45) Date de publication et mention de la délivrance du brevet: **27.02.2019**
(21) Numéro de dépôt: 16727745.8
(22) Date de dépôt: 20.04.2016
(51) Int. Cl.: G01J 1/42, H01J 49/16

(54) **PROCEDE ET DISPOSITIF DE CARACTERISATION D'UN FAISCEAU LASER DE FORTE PUISSANCE**
VERFAHREN UND VORRICHTUNG ZUR CHARAKTERISIERUNG EINES HOCHLEISTUNGSLASERSTRAHLS
METHOD AND DEVICE FOR CHARACTERIZING A HIGH-POWER LASER BEAM

(30) Priorité: 20.04.2015 FR 1553498
(43) Date de publication de la demande: 28.02.2018
(73) Titulaire: Sourcelab, 91400 Orsay (FR)
(72) Inventeur: SYLLA, Soriba Franciszek, 91400 Orsay (FR); SIRE, Cédric, 91400 Orsay (FR)
(74) Mandataire: Jacobacci Coralis Harle
(86) Numéro de dépôt international: PCT/FR2016/050925
(87) Numéro de publication internationale: WO 2016/170272

(56) Documents cités:
- HIROYUKI DAIDO ET AL: "Review Article;Review of laser-driven ion sources and their applications;Review of laser-driven ion sources and their applications", REPORTS ON PROGRESS IN PHYSICS, INSTITUTE OF PHYSICS PUBLISHING, BRISTOL, GB, vol. 75, no. 5, 17 avril 2012 (2012-04-17) , page 56401, XP020221979, ISSN: 0034-4885, DOI: 10.1088/0034-4885/75/5/056401
- CHOI I W ET AL: "Simultaneous generation of ions and high-order harmonics from thin conjugated polymer foil irradiated with ultrahigh contrast laser", APPLIED PHYSICS LETTERS, AMERICAN INSTITUTE OF PHYSICS, 2 HUNTINGTON QUADRANGLE, MELVILLE, NY 11747, vol. 99, no. 18, 31 octobre 2011 (2011-10-31), pages 181501-181501, XP012153336, ISSN: 0003-6951, DOI: 10.1063/1.3656338 [extrait le 2011-11-02]

## Description

La présente invention concerne le domaine technique des lasers de forte puissance susceptible d'interagir avec la matière de manière à créer des plasmas et à engendrer l'émission d'ions à haute énergie. Dans une application préférée mais non exclusive, l'invention se rapporte à l'étude des lasers de forte puissance à impulsions brèves parmi lesquels il est possible de citer les lasers dits Femto seconde.

Les propriétés d'interaction d'un faisceau laser de forte puissance avec la matière pour générer des particules à forte énergie cinétique constitue une voie prometteuse pour la réalisation de source de particules fortes énergie à usage thérapeutique ou encore utilisées pour l'inspection non destructive de pièces mécaniques notamment.

Cependant, un même dispositif destiné à générer un laser de forte puissance peut en fonction de son réglage soit générer un faisceau laser présentant des propriétés adaptées pour une interaction optimale avec la matière ou au contraire générer un faisceau laser ne présentant pas de telles qualités. Aussi, il est apparu le besoin de pouvoir disposer d'un procédé de caractérisation d'un faisceau laser de forte puissance dans son interaction avec la matière offrant une grande reproductibilité de la caractérisation réalisée et donnant des informations permettant d'optimiser le réglage du laser à caractériser afin qu'il agisse de manière optimale sur la matière pour émettre des particules à haute énergie.

Afin d'atteindre cet objectif l'invention concerne un procédé de caractérisation d'un faisceau laser de forte puissance comprenant les étapes suivantes :
- mise en oeuvre d'un miroir de concentration configuré pour focaliser le faisceau laser incident dans une zone de focalisation sur un axe focal (A) en un foyer (F),
- mise en oeuvre d'un porte-cible portant au moins une série de cibles sensiblement identiques et chacune adaptées pour émettre vers l'arrière au moins des protons sous l'action d'un faisceau laser de forte puissance sur sa face avant,
- mise oeuvre de moyens de mesure optique de la position de la face avant d'une cible située sur l'axe focal,
- mise en oeuvre d'un spectrographe de masse dont l'entrée est disposée de manière recevoir les protons éventuellement émis par une cible placée sur l'axe focal est soumise au faisceau laser à caractériser et qui est configuré pour quantifier l'énergie des protons les plus énergétiques,
- effectuer au moins une séquence de caractérisation avec une série de cibles donnée comprenant une série de tirs du faisceau laser à caractériser avec à chaque tir :
   - la mise en d'oeuvre d'une nouvelle cible de la série de cible,
   - un positionnement de la cible le long de l'axe focal différent de celui pour le tir précédent de manière que, pour la série de tir, les positions soient réparties sur un segment de l'axe focal comprenant le foyer,
   - l'enregistrement de la mesure de la position de la cible sur l'axe focal de la valeur de l'énergie des protons les plus énergétiques,
- présenter pour chaque séquence de caractérisation une courbe de l'énergie maximale des protons en fonction de la position de la cible sur l'axe focal.

La mise en oeuvre d'un miroir de concentration permet de ne concentrer le faisceau laser à caractériser que juste avant la zone de focalisation de sorte qu'il est possible de traiter ou « travailler » le faisceau laser à caractériser en amont du miroir de concentration sans risque de destruction des composants optiques situés en amont du miroir de concentration.

Le fait de répéter le tir du faisceau laser à caractériser avec des cibles sensiblement identiques voire identiques en plaçant ces dernières sur l'axe optique en différent points au voisinage du foyer permet, d'une part, de connaître au mieux la position du foyer en condition réelle d'utilisation du foyer. Il doit être remarqué que la position précise du foyer déterminée au moyen d'un laser de collimation ne correspond pas nécessairement à la position du foyer pour le laser à caractériser notamment en raison de la différence de longueur d'onde entre les deux lasers. D'autre part, l'observation de la courbe de l'énergie des protons en fonction de la position de la cible permet d'obtenir des informations sur les caractéristiques du faisceau laser telles que son contraste temporel, sa divergence et son intensité.

Dans le cadre de la présente invention les termes faisceau laser, laser et impulsion laser sont utilisés indifféremment.

Au sens de l'invention le contraste temporel d'une impulsion laser correspond est défini comme le rapport de la fluence laser pic (en J.cm-2) à la fluence à un instant donné (pour une durée normalisée, il est courant de se ramener à l'intensité laser). Pour une chaîne fs-multi-TW (moins de 1J), c'est le contraste au-delà de la dizaine de picoseconde qui est d'importance pour conserver une accélération efficace : un contraste suffisamment élevé à 10 ps implique que les parties de l'impulsion autre que le pic n'influent pas sur le plasma et ne jouent aucun rôle mesurable dans l'accélération ; inversement un contraste trop faible à 10 ps entraînera un chauffage prématuré de la cible et donc une détente thermique aux effets délétères sur les champs accélérateurs (notamment gradient longs réduisant la séparation de charges). Il est possible de se reporter notamment à la publication « Influence of the Laser Prepulse on Proton Acceleration in Thin-Foil » Experiments de M. Kaluza, J. Schreiber, M. I. K. Santala, G. D. Tsakiris, K. Eidmann, J. Meyer-ter-Vehn, and K. J. Witte, Phys. Rev. Lett. 93, 045003 - Published 20 July 2004 détaillant de manière plus approfondie la notion de contraste temporelle.

Au sens de l'invention la divergence d'une impulsion laser correspond à l'angle selon laquelle l'enveloppe d'intensité de l'impulsion laser évolue selon la direction de propagation tel que décrit dans la publication faite dans le contexte de l'accélération d'ions par laser : «Enhancement of Proton Acceleration by Hot-Electron Recirculation in Thin Foils Irradiated by Ultraintense Laser Pulses » de A. J. Mackinnon, Y. Sentoku, P. K. Patel, D. W. Price, S. Hatchett, M. H. Key, C. Andersen, R. Snavely, and R. R. Freeman, Phys. Rev. Lett. 88, 215006 - Published 14 May 2002.

Au sens de l'invention l'intensité ou intensité sur cible *I* d'une impulsion laser au foyer est définie par l'énergie laser sur cible divisée par la durée de l'impulsion et par la surface sur laquelle le faisceau est focalisé (tâche focale). Les études (numériques et expérimentales) de ces dix dernières années ont montré que l'énergie maximale des protons croît à peu près comme √*I*. Bien que cette dépendance en racine puisse sembler faible, les effets multiplicatifs des dépendances à l'énergie et à la taille du foyer (autant à la focalisation qu'à la divergence), deux paramètres laser (très) variables en pratique, suffisent à faire de la variation d'intensité un paramètre expérimental clé de la stabilité de l'accélération d'ions. Il est possible de se reporter notamment à la publication « Intense High-Energy Proton Beams from Petawatt-Laser Irradiation of Solids » de R. A. Snavely, M. H. Key, S. P. Hatchett, T. E. Cowan, M. Roth, T. W. Phillips, M. A. Stoyer, E. A. Henry, T. C. Sangster, M. S. Singh, S. C. Wilks, A. MacKinnon, A. Offenberger, D. M. Pennington, K. Yasuike, A. B. Langdon, B. F. Lasinski, J. Johnson, M. D. Perry, and E. M. Campbell, Phys. Rev. Lett. 85, 2945 - Published 2 October 2000, détaillant de manière plus approfondie la notion d'intensité sur cible.

D'autres documents pertinents sont les articles "Review of laser-driven ion sources and their applications" de Hiroyuki Daido et al., IOP Publishing, 2012 et "Simultaneous generation of ions and high-order harmonics from thin conjugated polymer foil irradiated with ultrahigh contrast laser" de I. W. Choi et al., Applied Physics Letters, 2011.

Dans le cadre de l'invention, il est cherché à caractériser des lasers intenses relativistes c'est dire des lasers susceptibles de présenter une intensité du cible de préférence supérieure ou égale à 10¹⁸ w.cm².

Selon une caractéristique de l'invention, le procédé comprend :
- la mise en oeuvre d'au moins deux séries différentes de cibles identiques l'épaisseur des cibles d'une série étant différente de l'épaisseur des cibles de l'autre série et le matériau constitutif des cibles des séries étant identique,
- présentation sur un même graphique des courbes obtenues lors de la séquence de caractérisation avec chaque série de cibles.

La mise en oeuvre de cible d'épaisseur différentes mais réalisées dans le même matériau et la comparaison des courbes obtenues permet de disposer d'informations plus précises sur le contraste temporel du faisceau laser à caractériser. En effet, les inventeurs ont eu le mérite de mettre en évidence que l'effondrement de l'énergie des protons émis lorsque la cible est située au foyer ou au voisinage immédiat de celui-ci pouvait être un indice d'un « faible » contraste temporel.

Selon une autre caractéristique de l'invention comprend :
- la mise en mise du procédé de caractérisation pour un laser de référence avec au moins une série de cible d'un type donné,
- la mise en oeuvre du procédé pour un laser à caractérisé avec au moins une série du même type qu'utilisée pour le laser de référence,
- la comparaison de la ou des courbes obtenues pour le laser à caractériser avec les courbes du laser de référence.

Selon encore une autre caractéristique du procédé selon l'invention la mesure de la position de chaque cible sur l'axe focal est effectuée au moyen d'un faisceau laser de réglage distinct du faisceau laser à caractériser.

L'invention concerne également un dispositif de caractérisation d'un faisceau laser de forte puissance selon la revendication 1.

La mis en oeuvre d'un tel dispositif permet de disposer simplement de tous les moyens nécessaires pour procéder à une caractérisation d'un faisceau laser de forte puissance de manière automatisée ou semi automatisée. Dans le cadre de la présente invention, il doit être compris que les moyens de positionnement et de translation qui sont associés au porte-cible font partie de et appartiennent au dispositif de caractérisation.

Il doit être remarqué que l'interaction du faisceau laser avec la cible induit l'émission de protons selon une direction sensiblement perpendiculaire au plan de la cible dans deux sens opposés à savoir vers l'avant et vers l'arrière de la cible, en considérant que l'avant de cible est situé du côté de la face recevant le faisceau laser. Ainsi, si la platine comprend au moins une zone de sortie des protons, elle peut comprendre deux zones de sortie de proton. Au sens de l'invention, il faut comprendre par zone de sortie une zone de la platine à partir de laquelle les protons sont recueillis pour mesurer leur énergie. Le dispositif selon l'invention comprend de préférence une seule zone de sortie de protons pour la mesure de leur énergie. Cette zone de sortie peut être vers l'avant ou vers l'arrière de la cible. Afin de dégager l'espace à l'avant de la cible, la zone de sortie est de préférence vers l'arrière de la cible.

Il est mis en oeuvre un miroir de concentration du faisceau laser de manière qu'en amont de ce miroir la puissance du faisceau ne soit pas destructrice. Le dispositif de caractérisation comprend ce miroir de concentration du laser situé en aval de la zone d'entrée et configuré pour focaliser un faisceau lumineux incident en un foyer optique situé dans la zone de focalisation et sur un axe focal du miroir. L'intégration du miroir de concentration dans le dispositif permet de maitriser la qualité du miroir et la précision des réglages optiques de manière à garantir une bonne reproductivité des mesures d'un même dispositif de caractérisation selon l'invention mais également d'un dispositif de caractérisation à un autre. Ainsi, l'usage de dispositifs de caractérisation selon l'invention est susceptible d'offrir une base commune de comparaison des caractéristiques de différentes sources de faisceau laser de forte puissance.

Selon l'invention, le dispositif de caractérisation comprend :
- un spectrographe de masse qui est situé en aval de la zone de sortie des ions haute énergie et qui est configuré pour mesurer l'énergie des protons émis,
- et une unité de commande qui est raccordée au module d'interface et au spectromètre et qui est adaptée pour enregistrer pour chaque tir sur une cible la position de la cible le long de l'axe optique et l'énergie des protons émis suite au tir.

L'intégration du spectrographe de masse dans le dispositif de caractérisation selon l'invention facilite la mise en oeuvre du dispositif de caractérisation et va également dans le sens d'une bonne reproductivité des mesures.

Selon une autre caractéristique de l'invention, le dispositif de caractérisation comprend des moyens d'évaluation de l'extension de la tâche focale au voisinage immédiat du foyer, raccordés au module d'interface. Ces moyens d'évaluation de l'extension de la tâche focale permettent d'évaluer la qualité de la focalisation effectuée par le miroir de concentration.

Selon une variante de cette caractéristique, les moyens d'évaluation de l'extension de la tâche focale sont configurés pour déterminer la position du foyer le long de l'axe focal. Ainsi les moyens d'évaluation de l'extension de la tâche focale permettent de détecter de manière empirique la position du foyer pour vérifier la qualité du réglage optique du dispositif selon l'invention et pour s'affranchir des incertitudes liées aux calculs et aux tolérances de réglages des autres composants optiques du dispositif de caractérisation.

Selon une autre variante de cette caractéristique, les moyens d'évaluation de l'extension de la tâche focale comprennent un miroir escamotable configuré pour être mobile entre :
- une position de travail dans laquelle le miroir escamotable est situé sur l'axe focal en amont du foyer et renvoie un faisceau lumineux issu du miroir de concentration vers les moyens de mesure de l'extension de la tâche focale et,
- une position de repos dans laquelle le miroir escamotable est situé en dehors de l'axe focal et du chemin d'un faisceau issu du miroir de concentration.

Cette variante permet de réaliser les opérations d'évaluation tout en permettant de dégager facilement l'axe optique lors que la mise en oeuvre du laser de forte puissance à pleine puissance.

Selon une caractéristique de l'invention, le module de détermination optique de la position de la face avant d'une cible sur l'axe focal, est configuré pour collecter la lumière diffusée par un faisceau laser illuminant ladite face avant.

Selon une autre caractéristique de l'invention, les moyens de détermination optique de la position de la face avant d'une cible sur l'axe focal, comprennent des moyens de récupération de la lumière diffusée et d'acheminement de cette lumière vers un capteur ou détecteur sensible à la distance (PSD). Au sens de l'invention, un capteur PSD est un capteur de position selon au moins une direction X et de préférence deux direction XY d'une image ou d'un point lumineux.

Selon l'invention, le dispositif de caractérisation comprend un miroir de renvoi configuré pour réfléchir au moins 90% du faisceau du laser à caractériser en direction de la zone de focalisation et pour transmettre une partie au moins d'un faisceau laser de réglage dont la source est située à l'opposé de la zone de focalisation par rapport au miroir de renvoi et dont l'axe optique est sensiblement confondu avec l'axe optique du faisceau laser de forte puissance après réflexion sur le miroir de renvoi. La mise en oeuvre d'un tel miroir de renvoi permet d'injecter facilement la lumière du faisceau laser de réglage dans le chemin optique du faisceau laser à caractériser. De manière préférée mais non strictement nécessaire, la source du faisceau laser de réglage appartient au dispositif de caractérisation selon l'invention.

Selon une variante de cette caractéristique, le miroir de renvoi est mobile en rotation selon un axe sensiblement parallèle à sa surface et le dispositif comprend des moyens de réglage de l'orientation du miroir de renvoi.

Selon une autre variante de cette caractéristique, le dispositif de caractérisation comprend, à l'arrière du miroir de renvoi, un module d'observation de la lumière réfractée par le miroir de renvoi lors de son illumination par le faisceau laser à caractériser émettant à une puissance réduite. Ce module d'observation permet de faciliter le réglage de l'orientation ou incidence angulaire du laser à caractériser en amont du miroir de renvoi de sorte à correctement injecter le laser à caractériser dans le dispositif selon l'invention.

Selon encore une autre variante de cette caractéristique, le miroir de renvoi comprend, sur sa face orientée vers le module de visualisation, au moins une ellipse. Cette ellipse permet de faciliter le centrage du faisceau laser incident sur le miroir de renvoi ainsi que le réglage de l'orientation du miroir de renvoi.

Selon une variante de la caractéristique préférée, le miroir de renvoi est situé entre la zone d'entrée et le miroir de concentration. Cette variante permet de limiter au maximum les risques de détérioration du miroir de renvoi par le faisceau laser à caractérisé émis à forte puissance voire à pleine puissance. Il doit être cependant remarqué que le miroir de renvoi pourrait aussi être placé en aval du miroir de concentration en étant suffisamment près de ce dernier pour ne pas se trouver dans une zone où la concentration d'énergie du faisceau laser à caractériser serait destructrice pour le miroir de renvoi.

Selon une autre variante de la caractéristique préférée, le dispositif de caractérisation est configuré pour réaliser les différentes mesures de position lors de l'illumination du miroir de concentration par le faisceau laser de réglage.

Selon une caractéristique de l'invention, le dispositif de caractérisation est configuré pour permettre une mise à la masse de l'ensemble des circuits et/ou composants électriques et électroniques présents sur la platine pendant une phase de tir à forte ou pleine puissance du laser à caractériser. Cette caractéristique vise à protéger les composants électriques et/ou électroniques contre les courants induits par les champs magnétiques intenses générés lors de l'impact à forte ou pleine puissance du faisceau laser à caractérisé sur la cible.

L'invention concerne également un exemple de porte-cible qui comprend deux châssis configurés pour coopérer de manière à maintenir au moins une feuille, destinée à former certaines au moins des cibles, par pincement entre deux grilles placées en correspondance et chacune formée par une série de perçages dans le châssis correspondant disposés selon un quadrillage régulier. Le pincement de la feuille de matériau entre les deux grilles permet de conférer une grande planéité aux régions de la feuille destinées à former les cibles.

Selon un exemple, les perçages présentent chacun un chanfrein tronconique convergeant vers la zone de pincement de la feuille. De manière préférée, l'angle au sommet des cônes définissant les chanfreins possède une valeur comprise entre 30° et 150°.

Selon un autre exemple, chaque grille comprend au moins 50 perçages.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

De même, les différentes caractéristiques, variantes et formes de réalisation du dispositif de caractérisation et du porte-cible selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un dispositif de caractérisation d'un faisceau laser de forte puissance et de son porte-cible pour la mise en oeuvre du procédé de caractérisation conforme à l'invention, étant entendu que le procédé de caractérisation selon l'invention peut être mis en oeuvre indépendamment du dispositif de caractérisation.
- La figure 1 est une perspective schématique partielle d'un dispositif de caractérisation d'un faisceau laser de forte puissance conforme à l'invention.
- La figure 2 est une élévation schématique, en vue de dessus, du dispositif de caractérisation illustré à la figure 1.
- La figure 3 est une perspective schématique montrant un porte cible selon l'invention associé à des moyens de positionnement des cibles ainsi qu'à des moyens de translation motorisée du porte-cible.
- La figure 4 est une perspective d'un porte cible amovible conforme à l'invention.
- La figure 5 est une perspective éclatée du porte cible illustré à la figure 4.
- La figure 6 une élévation en vue arrière d'un miroir de renvoi constitutif du dispositif de caractérisation illustré figures 1 et 2.
- La figure 7 est une vue de dessus schématique partielle du dispositif de caractérisation représenté figures 1 et 2, sur laquelle n'apparaissent que les principaux composants de la chaîne optique et qui montre notamment le parcours optique d'un faisceau laser de réglage.
- La figure 8 est une vue de dessus schématique partiel analogue à la figure 7 montrant notamment le parcours optique d'un faisceau laser à caractériser.
- La figure 9 est un graphique illustrant l'énergie maximale des protons en fonction de l'écart au foyer optique du miroir de concentration tel qu'établit au moyen de l'invention pour des cibles de différentes épaisseurs.

Un dispositif selon l'invention est destiné à permettre la caractérisation de la capacité d'un faisceau laser de forte puissance à interagir avec la matière. La source de ce faisceau laser ne fait pas partie de la présente invention et n'est donc pas représentée aux figures.

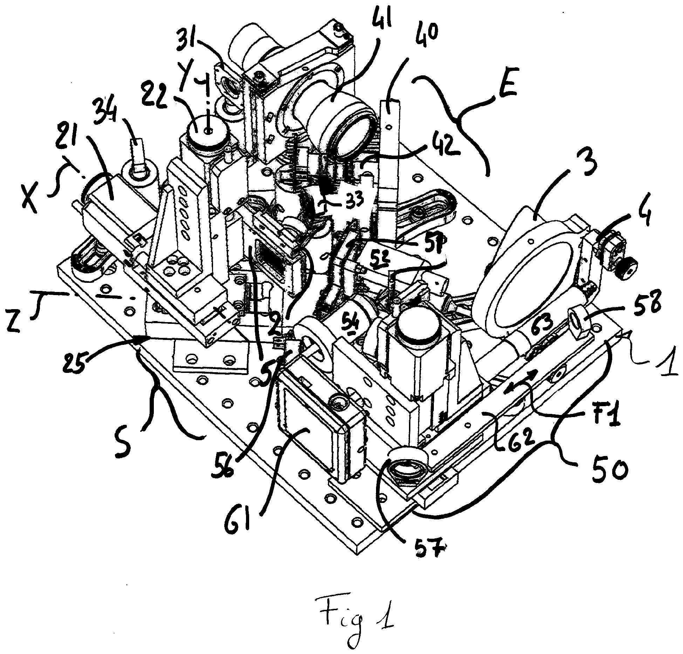

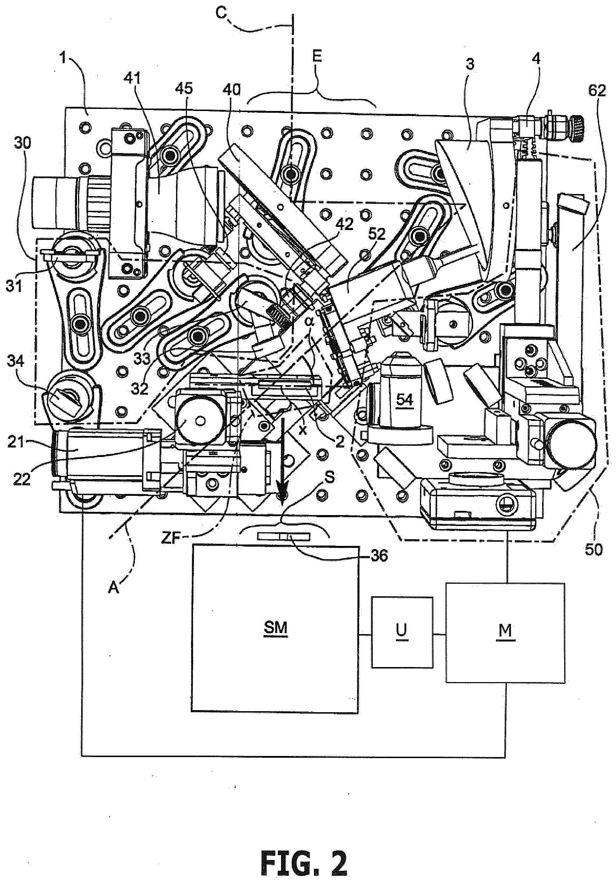

Le dispositif de caractérisation, telle qu'illustrée figures 1 et 2, comprend tout d'abord une platine 1 d'instrumentation qui délimite en partie au moins un espace de propagation du faisceau laser à caractériser le long d'un chemin optique C symbolisé en trait mixte aux figures 1 et 2. L'espace de propagation délimité par la platine 1 comprend une zone d'entrée E du faisceau laser à caractériser et une zone de sortie S d'un faisceau d'ions à haute énergie, notamment des protons, émis suite à une interaction du faisceau à caractériser avec une cible comme cela apparaîtra par la suite. Dans le cas présent, la zone de sortie S est située à l'opposé de la zone d'entrée E mais une telle disposition n'est pas impérative et peut être modifiée notamment en fonction de l'organisation des différents composants du dispositif de caractérisation.

Dans la mesure où la finalité première du dispositif de caractérisation selon l'invention est d'évaluer un faisceau laser de forte intensité à la lumière de ses capacités d'interaction avec la matière et plus particulièrement une cible, le dispositif de caractérisation comprend un porte cible 2 qui est situé dans une zone de focalisation ZF symbolisée à la figure 2 par un rectangle en trait mixtes avec des hachures. La zone de focalisation ZF est traversée par un axe focal A, ici confondu avec le chemin optique C, sur lequel se trouve un foyer optique F d'un miroir de concentration 3, le foyer F étant situé dans la zone de focalisation ZF.

Dans le cas présent le miroir de concentration 3 fait partie intégrante du dispositif de caractérisation et se trouve porté par la platine 1 par l'intermédiaire de systèmes de réglage 4 qui permettent d'ajuster la position et l'orientation de l'axe focal A en relation notamment avec le chemin optique C comme cela est bien connu de l'homme du métier.

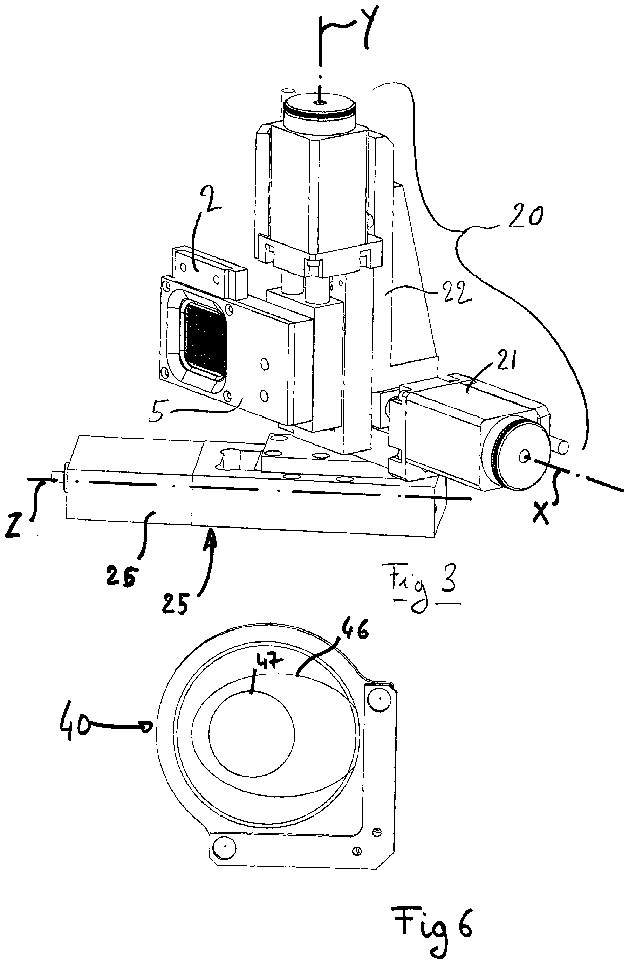

Afin de permettre le remplacement d'une partie au moins de ses composants et autoriser ainsi plusieurs campagnes de mesures, le porte-cible 2 est adaptée de manière amovible dans un berceau 5 mieux visible à la figure 3. Le berceau 5 comprend, selon l'exemple illustré, une rainure en T dans laquelle le porte-cible 2, de forme complémentaire, est engagé en translation.

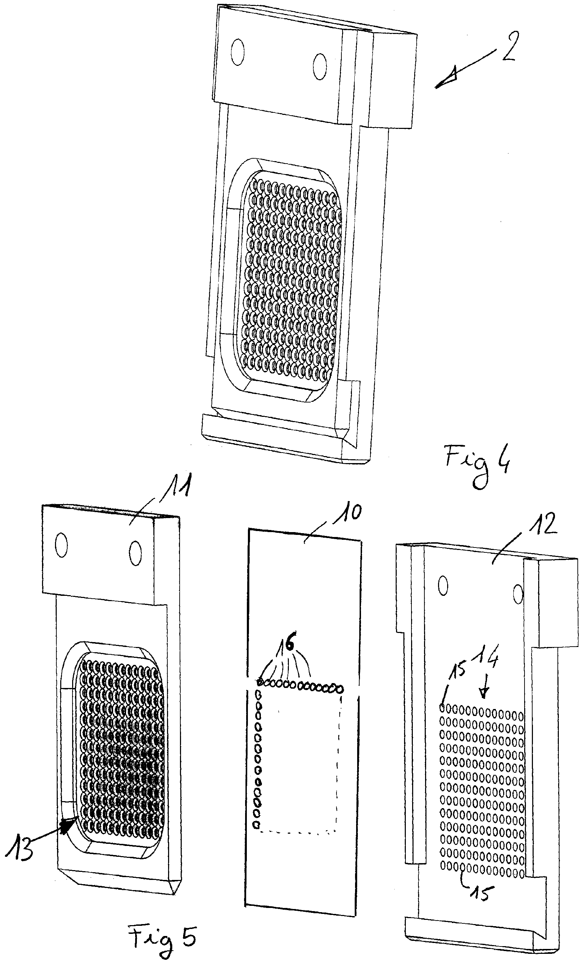

Le porte cible 2, représenté seul aux figures 4 et 5 comprend plusieurs cibles, qui correspondent dans le cas présent à plusieurs zones d'une même feuille 10 d'un matériau tel que de l'aluminium. La feuille 10 présente de préférence une épaisseur constante qui pourra, par exemple, être comprise entre 0,5 µm et 10µm et de préférence comprise entre 0,8 µm et 6 µm. Les zones impactées par le laser à caractériser étant détruites, la feuille 10 est un consommable et le porte cible 2 est conçu pour en permettre un remplacement aisé tout en assurant des conditions de mise en oeuvre optimales notamment en garantissant le positionnement des deux faces de la feuille 10 selon des plans sensiblement parallèles.

À cet effet, le porte cible 2 comprend deux châssis 11 et 12 configurés pour coopérer de manière à maintenir la feuille 10 par pincement entre deux grilles 13 et 14 placées en correspondance. Chaque grille 13,14 est ici formée par une série de 169 perçages 15 réalisés dans le châssis correspondant, respectivement 11 et 12, en étant disposés selon un quadrillage régulier. Le pincement de la feuille 10 entre les deux grilles permet de conférer une grande planéité aux régions de la feuille situées en regard des perçages et destinées à former les cibles 16. Afin d'éviter les risques d'interférences des bords des perçages avec le faisceau laser impactant chaque cible 15, les perçages présentent au niveau de leurs bords externes situé à l'opposé de la feuille 10, chacun un chanfrein tronconique convergeant vers la zone de pincement de la feuille 10. De manière préférée, l'angle au sommet des cônes définissant les chanfreins possède une valeur comprise entre 30° et 150°.

Le porte cible 2 et, dans le cas présent, plus particulièrement le berceau 5 qui le porte est associé à des moyens 20 de positionnement motorisés adaptés ou configurés pour placer chaque cible 16 individuellement sur l'axe focal A. Selon les exemples illustrés les moyens de positionnements 20 comprennent un premier actionneur 21 qui définit une direction de translation en X sensiblement parallèle aux lignes de perçages 15. Les moyens de positionnement 20 comprennent un deuxième actionneur 22 qui est translaté en X par le premier actionneur 22 et qui définit une direction de translation en Y sensiblement parallèle aux colonnes de perçage 15. Le deuxième actionneur 22 porte alors le berceau 5 de sorte que la combinaison des mouvements des premier et deuxième actionneurs assure un déplacement en X-Y. Dans le cas présent la direction X est sensiblement horizontale tandis que la direction Y est sensiblement verticale. Par ailleurs, les directions X - Y sont parallèles aux faces des châssis 11, 12 en contact avec la feuille 10.

Le berceau 5 est également associé à des moyens 25 de translation motorisée selon une direction Z sensiblement parallèle à l'axe focal A. Les moyens de translation 25 sont ici formés par un troisième actionneur 26 qui porte le premier actionneur 21 de sorte que les moyens de translation 25 permettent de déplacer et immobiliser une cible 15 en différents points de part et d'autre de la position du foyer F le long de l'axe focal A. Il convient comprendre que les moyens de translation 25 permettent de placer une cible en avant ou en arrière du foyer F mais également au niveau de ce dernier. Afin d'éviter, une réflexion destructrice du faisceau laser à caractériser sur les cibles, la direction Z forme un angle aigu différent de l'angle droit avec le plan XY, de sorte que l'angle d'incidence du faisceau laser à caractériser LP sur chaque cible, correspondant à l'angle α de la direction Z avec le plan XY, est inférieur à 90°. Dans le cas présent, la valeur de l'angle d'incidence α est choisie à 45°.

Les moyens de positionnement 20 et de translation 25 sont en outre raccordé à un module d'interface M configurés pour les piloter de manière à placer les cibles 16 successivement les unes après les autres sur l'axe focal A en des points déterminés en fonction d'instructions reçues d'une unité de commande U qui peut être extérieure au dispositif de caractérisation selon l'invention ou encore faire partie intégrante de ce dernier, selon les cas. Afin de ne pas surcharger les figures, les liaisons et raccordements électriques du module d'interface aux moyens de positionnement et de translation ainsi qu'aux différents autres composants électriques et électroniques du dispositif de caractérisation ne sont pas nécessairement représentés aux figures.

Afin de permettre un positionnement et une connaissance précise de la position de la face avant de chaque cible située sur l'axe focal A et destinée à être impactée par le faisceau laser à caractériser LP, le dispositif de caractérisation comprend également un module 30 de détermination optique de la position, dans la zone de focalisation ZF et le long de l'axe focal A de ladite face avant orientée vers le miroir de concentration 3.

Le module de détermination 30 peut être réalisé de toute manière appropriée. Dans le cas présent, le module de détermination 30 est configuré pour collecter la lumière diffusée par un faisceau laser illuminant ladite face avant, ce faisceau laser pouvant être émis par la source du faisceau laser à caractériser travaillant à puissance réduite ou encore par un faisceau laser de réglage comme cela apparaîtra par la suite.

Selon l'exemple illustré, le module de détermination 30 comprend un capteur ou détecteur sensible à la distance 31 en abrégé PSD, pour en anglais Position Sensitive Device. Le module de détermination 30 comprend, en outre, en tant que moyens de récupération et d'acheminement de la lumière diffusée vers le capteur 31, une lentille 32 collimatant la lumière vers un premier miroir 33 qui la renvoie vers un second miroir 33 dirigeant la lumière vers le capteur 31. Le module de détermination 30 et, plus particulièrement, son capteur 31 est raccordé au module d'interface M.

Le dispositif de caractérisation tel qu'ainsi réalisé comprend tous les éléments strictement nécessaires pour effectuer une série de tirs à puissance nominale ou pleine puissance du faisceau laser à caractériser LP sur les cibles 16 placées les unes après les autres sur l'axe focal A en différents points de manière à parcourir, dans la zone de focalisation ZF, un segment de l'axe focal A contenant le foyer F. À chaque tir, une partie des protons émis en direction de la zone de sortie S sont récupérés par un spectrographe de masse SM, aussi appelé spectrographe de Thomson, qui est configuré pour mesurer leur énergie et plus particulièrement pour déterminer et enregistrer l'énergie des protons les plus énergétiques émis. Afin d'éviter une pollution des mesures et le bruit qui pourrait être engendré par les protons les moins énergétiques, il est mis en oeuvre un diaphragme 36 en aval de l'entrée du spectrographe de masse SM. De manière à faciliter l'automatisation et l'enregistrement des mesures, le spectrographe de masse SM est, de préférence, raccordé à l'unité de commande U.

Bien que le dispositif de caractérisation tel que jusqu'à présent décrit et comme cela a été précisé précédemment comprend l'ensemble des éléments strictement nécessaires pour atteindre l'objectif de l'invention, selon la forme préférée de réalisation illustrée, le dispositif de caractérisation comprend en outre un miroir de renvoi 40 configuré pour réfléchir au moins 90 % du faisceau laser à caractériser LP (Laser de Puissance) en direction de la zone de focalisation ZF. Dans le cas présent, le miroir de renvoi 40 dirige la lumière en direction du miroir de concentration 3 et se trouve donc situé en amont de ce dernier par rapport au sens d'émission de la lumière. Le miroir de renvoi 40 est en outre configuré pour transmettre une partie au moins d'un faisceau laser de réglage LR dont la source 41 est située à l'opposé de la zone de focalisation ZF par rapport au miroir de renvoi 40. Ainsi, le miroir de renvoi 40 permet d'injecter dans la chaîne optique un faisceau laser de réglage LR destiné à faciliter le réglage de la chaîne optique du dispositif de caractérisation ainsi que la réalisation de différentes mesures sans utiliser systématiquement la source du faisceau laser à caractériser travaillant à puissance réduite ou très réduite.

Le miroir de renvoi 40 est, de manière préférée mais non exclusive, mobile en rotation selon un axe sensiblement parallèle à sa surface de réflexion ou face avant et se trouve associé à des moyens 42 de réglage de l'orientation angulaire du miroir de renvoi 40. Afin de faciliter les réglages, le dispositif de caractérisation comprend un module 45 d'observation de la lumière réfractée vers l'arrière par le miroir de renvoi 40 lors de l'illumination de sa face avant. Le module d'observation 45 est, par exemple, constitué par une caméra grand-angle raccordée au module d'interface M. Le module d'observation 45 permet notamment d'observer la tâche d'impact d'un faisceau lumineux incident sur la face avant du miroir de renvoi 40. Afin de faciliter le réglage, la face arrière du miroir de renvoi 40 peut comprendre comme le montre la figure 6, une ellipse 46 définissant la position optimale de la tâche d'impact du faisceau laser à caractériser LP et une ellipse 47 définissant la position optimale de la tâche d'impact du faisceau laser de réglage LR. Il doit être remarqué que l'observation de la tâche d'impact du faisceau laser à caractériser LP n'est réalisée que quand ce dernier est émis à très faible puissance.

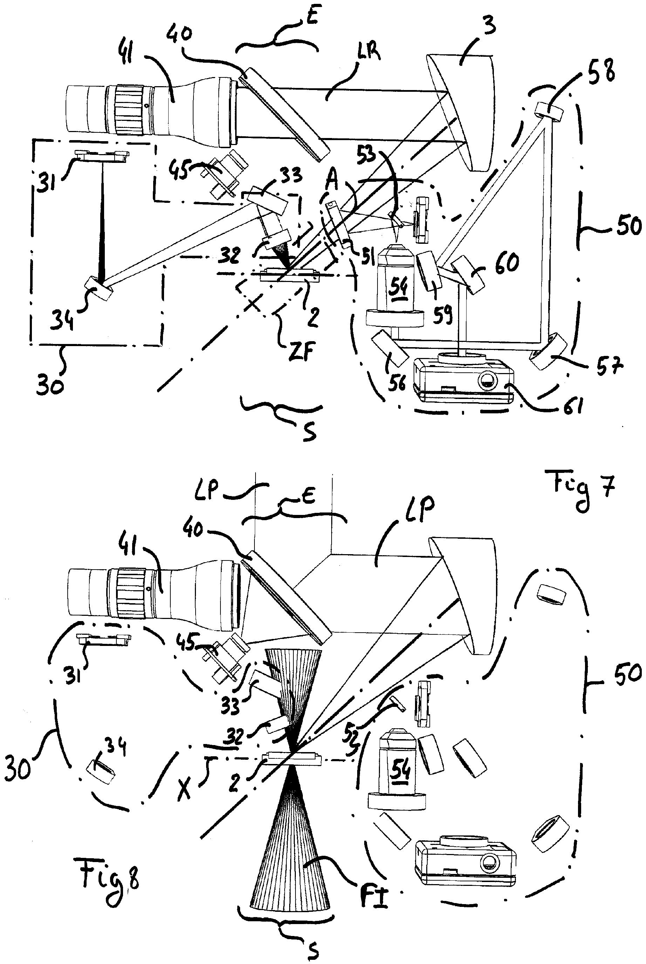

Le faisceau laser de réglage LR peut notamment être utilisé pour la détermination de la position de chaque cible le long de l'axe focal A par les moyens de détermination 30, le parcours du faisceau laser de réglage LR, à cet effet, est plus particulièrement illustré à la figure 7.

Le faisceau laser de réglage LR peut également être utilisé pour évaluer l'extension de la tâche focale au voisinage du foyer F et par là-même évaluer la position du foyer F le long de l'axe optique.

À cet effet, le dispositif de caractérisation, selon l'exemple illustré, comprend des moyens 50 d'évaluation de l'extension de la tâche focale également configurés pour déterminer la position du foyer F le long de l'axe focal A. Les moyens d'évaluation 50 comprennent tout d'abord un miroir semi-transparent 51 escamotable qui est porté par un actionneur 52 configuré pour le déplacer entre une position de travail et une position de repos. L'actionneur 52 est raccordé au module d'interface M qui en permet le pilotage.

En position de travail le miroir 51 est placé sur l'axe focal A tandis qu'en position de repos, le miroir 51 est situé en dehors de l'axe focal A et du trajet d'un faisceau laser réfléchi par le miroir de concentration 3. La position de repos permet d'éviter toute interférence du miroir escamotable 51 avec le faisceau laser à caractériser lorsque ce dernier est émis à pleine puissance.

En position de travail et comme le montre la figure 7, le miroir escamotable 51 permet à une partie d'un faisceau incident de le traverser pour atteindre la zone de focalisation ZF et plus particulièrement la cible 16 éventuellement située sur un axe focal A. La lumière qui atteint la cible 16 peut alors être utilisée par le module 30 pour déterminer de la position de ladite cible. Toujours en position de travail, le miroir escamotable 51 réfléchit l'autre partie d'un faisceau incident en direction d'un miroir intermédiaire 53 qui oriente le faisceau vers un dispositif grossisseur 54 en sortie duquel sont disposés une série de cinq miroirs de renvoi 56 à 60 destinés à allonger le chemin optique du faisceau avant qu'il atteigne une caméra 61. L'allongement du chemin optique permet d'obtenir un grossissement de la tâche focale suffisant pour permettre une détection de la variation de sa taille par la caméra 61. L'ensemble des composants optiques 54 à 61, à savoir le dispositif grossisseur 54 et les composants optiques 55 à 61 situés en aval de celui-ci sont portés par une embase commune 62 mobile en translation comme indiqué par la double flèche F1. L'embase 62 est alors manoeuvrée par un actionneur 63 raccordé au module d'interface M qui en permet le pilotage.

Le déplacement en translation de l'embase 62 est assimilable à un déplacement de la caméra 61 le long de l'axe optique. Ainsi, observation de la variation de l'extension de la tâche focale par la caméra 61, au fur et à mesure du déplacement de ladite caméra, permet d'identifier la région dans laquelle se situe le foyer optique F en partant du principe que l'extension de la tâche focale est minimale au niveau du foyer optique F et en tenant compte de l'incertitude liée à la longueur de Rayleigh.

Le dispositif de caractérisation tel qu'ainsi constitué est mis en oeuvre de la manière suivante.

Tout d'abord il est procédé au réglage de la chaîne optique au moyen du laser de réglage LR. Ensuite, il est procédé à la détermination de la position du foyer F le long de l'axe optique A au moyen du module 50. Cette détermination peut être réalisée soit au moyen du laser de réglage LR comme le montre la figure 7 soit au moyen de la source du laser à caractériser LP émettant à faible voire très faible puissance. La détermination de la position du foyer F et de préférences réalisées de manière automatique par une unité de commande U via le module interface M.

Une fois la position du foyer F évaluée cette dernière constitue la référence ou le centre d'un segment de l'axe focal A situé dans la zone de focalisation ZF le long duquel vont être successivement placées les cibles 16 soumises à l'impact du faisceau laser à caractériser LP émis à forte puissance ou puissance nominale voire puissance maximale, dans le cadre d'une séquence de caractérisation conduite de manière automatique par une unité de commande U.

En début de séquence de caractérisation, il est placé dans le porte cible 2 une feuille 10 d'un matériau adapté comme par exemple une feuille d'aluminium d'épaisseur constante de l'ordre de 6 µm par exemple. Le porte cible 2 est ensuite placé dans le berceau 5.

La première cible est alors placée sur l'axe focal A, en amont du foyer F en étant décalé par rapport à ce dernier d'une valeur d'offset ou décalage par rapport au foyer de l'ordre de - 150 µm par exemple.

La position exacte de la face avant de la cible est alors mesurée par la mise en oeuvre des moyens de détermination 30 avec une illumination par le laser de réglage LR. La position exacte est enregistrée par l'unité de commande U.

Avant le tir du faisceau laser à caractériser LP, l'unité de commande U pilote une mise à la masse de tous les dispositifs électriques et électroniques présents sur la platine 1.

Il est ensuite procédé au tir du faisceau laser à caractériser LP sur la cible et le spectrographe de masse SM mesure alors l'énergie des protons les plus énergétiques présents dans le faisceau d'ion FI généré par l'impact du faisceau laser LP sur la cible 16. La valeur d'énergie mesurée est alors enregistrée par l'unité de commande U.

Il est procédé de la même manière pour une nouvelle cible 16 placée sur l'axe focal en étant décalée par rapport à la position de la cible précédente d'un pas donné, par exemple d'une valeur de +2 µm. Ces opérations sont répétées successivement jusqu'à atteindre une valeur d'offset ou décalage de +150 µm. De manière préférée, la répétition des opérations décrites précédemment est effectuée de manière automatisée.

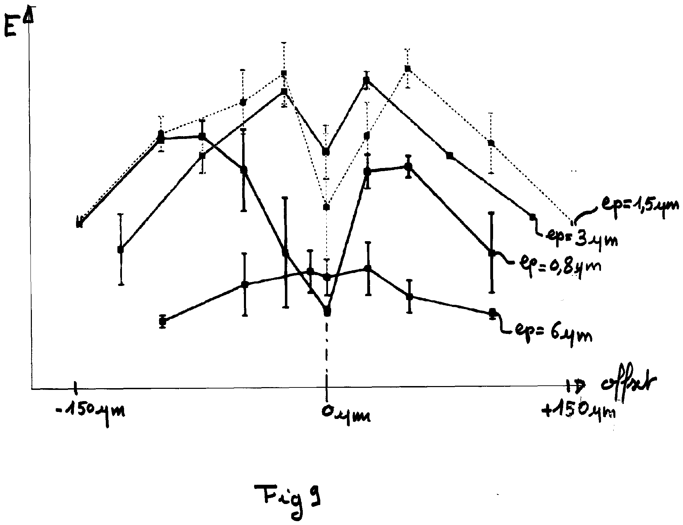

L'unité de commande U peut alors établir une courbe telle qu'illustrée à la figure 9 indiquant l'énergie maximale des protons en fonction de l'écart (offset) au foyer F.

Ces opérations sont répétées pour des feuilles d'épaisseurs différentes et selon l'exemple illustré, respectivement 3µm, 1.5µm et 0,8 µm de sorte qu'il est établi le faisceau de courbes de la figure 9.

Une observation de la figure 9 permet alors de connaître les caractéristiques du laser à caractériser LP. De plus, la comparaison d'un faisceau de courbes tel que celui de la figure 9 établi avec un laser de référence connu pour offrir des caractéristiques optimales avec le faisceau de courbe pour un laser à caractériser permet de savoir si le laser à caractériser est bien réglé pour offrir des performances optimales d'interaction avec la matière.

Bien entendu, le procédé selon l'invention peut être modifié de toute manière appropriée dans le cadre des revendications annexées. De même, le dispositif selon l'invention peut être utilisé de manière différente en fonction des caractéristiques dont la connaissance est recherchée.

## Revendications

1. Dispositif de caractérisation d'un faisceau laser de forte puissance **caractérisé en ce qu'**il comprend :
- une platine (1) délimitant en partie au moins un espace de propagation du faisceau laser à caractériser (LP), comprenant une zone d'entrée (E) du faisceau laser à caractériser (LP), une zone de sortie (S) d'un faisceau d'ions haute énergie et supportant :
- un porte-cible (2) amovible qui est situé dans une zone de focalisation (ZF) traversée par un axe focal (A) sur lequel se trouve un foyer optique (F) d'un miroir de concentration (3) et qui porte plusieurs cibles (16) chacune configurée pour émettre au moins des protons suite à un tir du faisceau laser à caractériser (LP),
- des moyens de positionnement (20) motorisés adaptés pour placer chaque cible individuellement sur l'axe focal (A) du miroir,
- des moyens de translation (25) motorisée du porte-cible (2), sensiblement parallèlement à l'axe focal (A) du miroir de concentration (3) dans la zone de focalisation (ZF), configurés pour pouvoir placer et immobiliser une cible (16) en différent points de part et d'autre de la position du foyer (F),
- un module de détermination (30) optique de la position, dans la zone de focalisation et le long de l'axe focal (A), d'une face avant orientée vers le miroir de focalisation pour une cible positionnée sur l'axe focal (A),
- un module d'interface (M) qui est raccordé aux moyens de positionnements (20), aux moyens de translation (25) du porte-cible (2) et au module de détermination (30) de la position de chaque cible et qui est adapté pour en fonction d'instructions reçues placer successivement les cibles les unes après les autres sur l'axe focal (A) en des points déterminés et pour mesurer et transmettre la position sur l'axe focal (A) de chaque cible,
- un miroir de concentration (3) du laser situé en aval de la zone d'entrée (E) et configuré pour focaliser un faisceau lumineux incident en un foyer (F) optique situé dans la zone de focalisation et sur un axe focal (A) du miroir (3),
- un spectrographe de masse (SM) situé en aval de la zone de sortie (S) des ions haute énergie et qui est configuré pour mesurer l'énergie des protons émis,
- une unité de commande (U) qui est raccordée au module d'interface (M) et au spectrographe (SM) et qui est adaptée pour enregistrer pour chaque tir sur une cible la position de la cible le long de l'axe optique et l'énergie des protons émis suite au tir, le dispositif de caractérisation se **caractérise en ce qu'**il comprend un miroir de renvoi (40) configuré pour réfléchir au moins 90% du faisceau du laser à caractériser (LP) en direction de la zone de focalisation (ZF) et pour transmettre une partie au moins d'un faisceau laser de réglage (LR) dont la source est située à l'opposé de la zone de focalisation (ZF) par rapport au miroir de renvoi (40) et dont l'axe optique est sensiblement confondu avec l'axe optique du faisceau laser à caractériser (LP) après réflexion sur le miroir de renvoi (40).

2. Dispositif de caractérisation, selon l'une des revendications précédentes, **caractérisé en ce qu'**il comprend des moyens d'évaluation (50) de l'extension de la tâche focale au voisinage immédiat du foyer (F), raccordés au module d'interface (M).

3. Dispositif de caractérisation, selon la revendication 2, **caractérisé en ce que** les moyens d'évaluation (50) de l'extension de la tâche focale sont configurés pour déterminer la position du foyer (F) le long de l'axe focal (A).

4. Dispositif de caractérisation d'un faisceau laser de forte puissance, selon l'une des revendications 2 ou 3 précédentes, **caractérisé en ce que** les moyens d'évaluation (50) de l'extension de la tâche focale comprennent un miroir escamotable (51) configuré pour être mobile entre :
- une position de travail dans laquelle le miroir escamotable (51) est situé sur l'axe focal (A) en amont du foyer (F) et renvoie un faisceau lumineux issu du miroir de concentration (3) vers les moyens d'évaluation (50) de l'extension de la tâche focale et,
- une position de repos dans laquelle le miroir escamotable (51) est situé en dehors de l'axe focal (A) et du chemin d'un faisceau issu du miroir de concentration (3).

5. Dispositif de caractérisation d'un faisceau laser de forte puissance, selon l'une des revendications précédentes, **caractérisé en ce que** le module de détermination (30) optique de la position de la face avant d'une cible sur l'axe focal (A), est configuré pour collecter la lumière diffusée par un faisceau laser illuminant ladite face avant.

6. Dispositif de caractérisation d'un faisceau laser de forte puissance, selon l'une des revendications précédentes, **caractérisé en ce que** le module de détermination (30) optique de la position de la face avant d'une cible sur l'axe focal (A), comprennent des moyens (32,33,34) de récupération de la lumière diffusée et d'acheminement de cette lumière vers un capteur (31) ou détecteur sensible à la distance (PSD).

7. Dispositif de caractérisation d'un faisceau laser de forte puissance, selon l'une des revendications précédentes, **caractérisé en ce que** le miroir de renvoi (40) est mobile en rotation selon un axe sensiblement parallèle à sa surface et **en ce que** le dispositif comprend des moyens (42) de réglage de l'orientation du miroir de renvoi (40).

8. Dispositif de caractérisation d'un faisceau laser de forte puissance, selon l'une des revendications précédentes, **caractérisé en ce qu'**il comprend à l'arrière du miroir de renvoi (40) un module d'observation (45) de lumière réfractée par le miroir de renvoi (40) lors de son illumination par le faisceau laser à caractériser (LP) émettant à une puissance réduite.

9. Dispositif de caractérisation d'un faisceau laser de forte puissance, selon l'une des revendications précédentes, **caractérisé en ce qu'**il est configuré pour réaliser les différentes mesures de position lors de l'illumination du miroir de concentration (3) par le faisceau laser de réglage (LR).

## Patentansprüche

1. Vorrichtung zur Charakterisierung eines Hochleistungslaserstrahls, **dadurch gekennzeichnet, daß** sie
- eine Platine (1), die wenigstens teilweise einen Ausbreitungsraum des zu charakterisierenden Laserstrahls (LP) begrenzt und eine Eingangszone (E) des zu charakterisierenden Laserstrahls (LP), eine Ausgangszone (S) eines Hochenergieionenstrahls aufweist und
- einen abnehmbaren Zielträger (2), der in einem Fokussierbereich (ZF) angeordnet ist, der von einer Brennachse (A) durchquert wird, auf der sich ein Brennpunkt (F) eines Sammelspiegels (3) befindet, und der mehrere Ziele (16) trägt, von denen jedes dazu ausgelegt ist, in Folge eines mit dem zu charakterisierenden Laserstrahl (LP) erfolgten Schusses wenigstens Protonen auszusenden,
- motorisierte Positioniermittel (20), die dazu ausgelegt sind, jedes Ziel individuell auf der Brennachse (A) des Spiegels anzuordnen,
- Mittel (25) zum motorisierten translatorischen Bewegen des Zielträgers (2) im Wesentlichen parallel zur Brennachse (A) des Sammelspiegels (3) im Brennbereich (ZF), die dazu ausgelegt sind, ein Ziel (16) an verschiedenen Punkten beiderseits des Brennpunkts (F) anzuordnen und festzulegen,
- ein Modul (30), um im Brennbereich und entlang der Brennachse (A) für ein auf der Brennachse (A) angeordnetes Ziel die Position einer zum Brennspiegel gerichteten Vorderseite optisch zu bestimmen,
trägt,
- ein Schnittstellenmodul (M), das mit den Positioniermitteln (20), mit den Translationsmitteln (25) des Zielträgers (2) und mit dem Modul (30) zum Bestimmen der Position jedes Ziels verbunden ist und das dazu ausgelegt ist, in Abhängigkeit von erhaltenen Befehlen die Ziele nacheinander auf der Brennachse (A) an bestimmten Punkten anzuordnen und die Position jedes Ziels auf der Brennachse (A) zu messen und zu übertragen,
- einen Spiegel (3) zum Sammeln des Lasers, der strahlaufwärts der Eingangszone (E) gelegen ist und dazu ausgelegt ist, einen einfallenden Lichtstrahl in einem optischen Brennpunkt (F) zu sammeln, der im Brennbereich und auf der Brennachse (A) des Spiegels (3) liegt,
- ein Massenspektrometer (SM), das strahlabwärts der Ausgangszone (S) der Hochenergieionen gelegen ist und der dazu ausgelegt ist, die Energie der ausgestrahlten Ionen zu messen,
- eine Steuereinheit (U), die mit dem Schnittstellenmodul (M) und dem Spektrometer (SM) verbunden ist und die dazu ausgelegt ist, für jeden Schuß auf ein Ziel die Position des Ziels entlang der optischen Achse und die aufgrund des Schusses ausgestrahlte Energie der Protonen zu registrieren,
aufweist,
wobei die Vorrichtung zur Charakterisierung **dadurch gekennzeichnet ist, daß** sie einen Umlenkspiegel (40) aufweist, der dazu ausgelegt ist,
wenigstens 90 % des zu charakterisierenden Laserstrahls (LP) in Richtung des Brennbereichs (ZF) zu reflektieren und wenigstens einen Teil eines Regelungslaserstrahls (LR) zu übertragen, dessen Quelle in Bezug auf den Umlenkspiegel (40) am vom Brennbereich (ZF) abgewandten Ende angeordnet ist und dessen optische Achse im Wesentlichen mit der optischen Achse des zu charakterisierenden Laserstrahls (LP) nach Spiegelung auf dem Umlenkspiegel (40) zusammenfällt.

2. Vorrichtung zur Charakterisierung gemäß einem der vorangehenden Ansprüche, **dadurch gekennzeichnet, daß** sie Mittel (50) zur Bewertung der Ausdehnung des Brennfleckens in unmittelbarer Umgebung des Brennpunkts (F) aufweist, die mit dem Schnittstellenmodul (M) verbunden sind.

3. Vorrichtung zur Charakterisierung gemäß Anspruch 2, **dadurch gekennzeichnet, daß** die Mittel (50) zur Bewertung der Ausdehnung des Brennfleckens dazu ausgelegt sind, die Position des Brennpunkts (F) entlang der Brennachse (A) zu bestimmen.

4. Vorrichtung zur Charakterisierung eines Hochleistungslaserstrahls gemäß einem der vorangehenden Ansprüche 2 oder 3, **dadurch gekennzeichnet, daß** die Mittel (50) zur Bewertung der Ausdehnung des Brennfleckens einen einziehbaren Spiegel (51) aufweisen, der dazu ausgelegt ist, zwischen
- einer Arbeitsposition, in der der einziehbare Spiegel (51) auf der Brennachse (A) strahlaufwärts des Brennpunkts (F) gelegen ist und einen vom Sammelspiegel (3) kommenden Lichtstrahl zu den Mitteln (50) zur Bewertung der Ausdehnung des Brennfleckens umlenkt, und
- einer Ruheposition, in der der einziehbare Spiegel (51) außerhalb der Brennachse (A) und des vom Sammelspiegel (3) kommenden Lichtstrahls gelegen ist,
bewegbar ist.

5. Vorrichtung zur Charakterisierung eines Hochleistungslaserstrahls gemäß einem der vorangehenden Ansprüche, **dadurch gekennzeichnet, daß** das Modul (30) zum optischen Bestimmen der Position der Vorderseite eines Ziels auf der Brennachse (A) dazu ausgelegt ist, das durch einen die Vorderseite beleuchtenden Laserstrahl ausgestrahlte Licht zu sammeln.

6. Vorrichtung zur Charakterisierung eines Hochleistungslaserstrahls gemäß einem der vorangehenden Ansprüche, **dadurch gekennzeichnet, daß** das Modul (30) zum optischen Bestimmen der Position der Vorderseite eines Ziels auf der Brennachse (A) Mittel (32, 33, 34) zum Einfangen des ausgestrahlten Lichts und zum Zuführen dieses Lichts zu einem Sensor (31) oder entfernungsempfindlichen Detektor (PSD) aufweist.

7. Vorrichtung zur Charakterisierung eines Hochleistungslaserstrahls gemäß einem der vorangehenden Ansprüche, **dadurch gekennzeichnet, daß** der Umlenkspiegel (40) um eine zu seiner Oberfläche im Wesentlichen parallele Achse drehbeweglich ist und daß die Vorrichtung Mittel (42) zum Steuern der Orientierung des Umlenkspiegels (40) aufweist.

8. Vorrichtung zur Charakterisierung eines Hochleistungslaserstrahls gemäß einem der vorangehenden Ansprüche, **dadurch gekennzeichnet, daß** sie auf der Rückseite des Umlenkspiegels (40) ein Modul (45) zur Beobachtung des bei dessen Beleuchtung durch den mit reduzierter Leistung strahlenden zu charakterisierenden Laserstrahl (LP) durch den Umlenkspiegel (40) gebrochenen Lichts aufweist.

9. Vorrichtung zur Charakterisierung eines Hochleistungslaserstrahls gemäß einem der vorangehenden Ansprüche, **dadurch gekennzeichnet, daß** sie dazu ausgelegt ist, die verschiedenen Positionsmessungen bei der Beleuchtung des Sammelspiegels (3) durch den Regelungslaserstrahl (LR) durchzuführen.

## Claims

1. A device for characterizing a high-power laser beam, **characterized in that** it comprises:
- a plate (1) partly delimiting at least a space for the propagation of the laser beam to be characterized (LP), comprising an area (E) of entry of the laser beam to be characterized (LP), an area (S) of exit of a high-energy ion beam and supporting:
- a removable target-carrier (2) that is located in a focusing area (ZF) passed through by a focal axis (A) on which is located an optical focal point (F) of a concentrating mirror (3) and that carries several targets (16) each configured to emit at least protons following a shooting of the laser beam to be characterized (LP),
- motorized positioning means (20) adapted to place each target individually on the focal axis (A) of the mirror,
- motorized translation means (25) of the target-carrier (2), substantially parallel to the focal axis (A) of the concentrating mirror (3) in the focusing area (ZF), configured to be able to place and immobilize a target (16) at different points on either side of the position of the focal point (F),
- a module (30) for optically determining the position, in the focusing area and along the focal axis (A), of a front face directed towards the focusing mirror for a target positioned on the focal axis (A),
- an interface module (M) that is connected to the positioning means (20), to the translation means (25) of the target-carrier (2) and to the module (30) for determining the position of each target and that is adapted to, based on instructions received, place successively the targets, one after each other, on the focal axis (A) at determined points and to measure and transmit the position on the focal axis (A) of each target,
- a mirror (3) for concentrating the laser, located downstream from the entry area (E) and configured to focus an incident light beam to an optical focal point (F) located in the focusing area and on a focal axis (A) of the mirror (3),
- a mass spectrograph (SM) located downstream from the area (S) of exit of the high-energy ions and that is configured to measure the energy of the emitted protons,
- a control unit (U) that is connected to the interface module (M) and to the spectrograph (SM) and that is adapted to record, for each shooting on a target, the position of the target along the optical axis and the energy of the protons emitted following the shooting,
the characterisation device being **characterized in that** it comprises a reflecting mirror (40) configured to reflect at least 90 % of the laser beam to be characterized (LP) towards the focusing area (ZF) and to transmit a part at least of an adjustment laser beam (LR), whose source is located at the opposite of the focusing area (ZF) with respect to the reflecting mirror (40) and whose optical axis is substantially merged with the optical axis of the laser beam to be characterized (LP) after reflection on the reflecting mirror (40).

2. The characterizing device according to one of the preceding claims, **characterized in that** it comprises means (50) for evaluating the extent of the focal spot in the immediate vicinity of the focal point (F), connected to the interface module (M).

3. The characterizing device according to claim 2, **characterized in that** the means (50) for evaluating the extent of the focal spot are configured to determine the position of the focal point (F) along the focal axis (A).

4. The device for characterizing a high-power laser beam according to one of the preceding claims 2 or 3, **characterized in that** the means (50) for evaluating the extent of the focal spot comprise a retractable mirror (51) configured to be mobile between :
- a working position in which the retractable mirror (51) is located on the focal axis (A) upstream from the focal point (F) and reflects a light beam coming from the concentrating mirror (3) to the means (50) for evaluating the extent of the focal spot, and
- a rest position in which the retractable mirror (51) is located out of the focal axis (A) and of the path of a beam coming from the concentrating mirror (3).

5. The device for characterizing a high-power laser beam according to one of the preceding claims, **characterized in that** the module (30) for optically determining the position of the front face of a target on the focal axis (A) is configured to collect the light scattered by a laser beam illuminating said front face.

6. The device for characterizing a high-power laser beam according to one of the preceding claims, **characterized in that** the module (30) for optically determining the position of the front face of a target on the focal axis (A) comprises means (32, 33, 34) for recovering the scattered light and for routing this light towards a sensor (31) or position-sensitive detector (PSD).

7. The device for characterizing a high-power laser beam according to one of the preceding claims, **characterized in that** the reflecting mirror (40) is mobile in rotation about an axis substantially parallel to the surface thereof and **in that** the device comprises means (42) for adjusting the orientation of the reflecting mirror (40).

8. The device for characterizing a high-power laser beam according to one of the preceding claims, **characterized in that** it comprises on the rear of the reflecting mirror (40) a module (45) for observing the light refracted by the reflecting mirror (40) during the illumination thereof by the laser beam to be characterized (LP) emitting at a reduced power.

9. The device for characterizing a high-power laser beam according to one of the preceding claims, **characterized in that** it is configured to perform the different position measurements during the illumination of the concentrating mirror (3) by the adjustment laser beam (LR).
